# FASCICULE DE BREVET EUROPEEN

(11) **EP 2 560 808 B1**
(45) Date de publication et mention de la délivrance du brevet: **30.11.2016**
(21) Numéro de dépôt: 11731023.5
(22) Date de dépôt: 20.04.2011
(51) Int. Cl.: B29C 70/46, B29C 70/48, B29C 70/54, B29C 33/38, F01D 21/04

(54) **DISPOSITIF DE FABRICATION D'UN CARTER EN MATERIAU COMPOSITE ET PROCEDE DE FABRICATION METTANT EN OEUVRE UN TEL DISPOSITIF**
VORRICHTUNG ZUR HERSTELLUNG EINES GEHÄUSES AUS VERBUNDSTOFF UND HERSTELLUNGSVERFAHREN MIT EINER DERARTIGEN VORRICHTUNG
DEVICE FOR MANUFACTURING A CASING MADE OF A COMPOSITE MATERIAL AND MANUFACTURING METHOD EMPLOYING SUCH A DEVICE

(30) Priorité: 20.04.2010 FR 1052999
(43) Date de publication de la demande: 27.02.2013
(73) Titulaire: Snecma, 75015 Paris (FR)
(72) Inventeur: PLANTE, Romain, F-77210 Avon (FR); CAUCHOIS, Jean-Pierre, F-67510 Obersteinbach (FR); BETEGA, Louis, F-57220 Boucheporn (FR); CASTANIE, Jean-Louis, Robert, Marcel, F-94100 Saint Maur des Fosses (FR)
(74) Mandataire: Ilgart, Jean-Christophe
(86) Numéro de dépôt international: PCT/FR2011/050908
(87) Numéro de publication internationale: WO 2011/131908

(56) Documents cités:
- EP-A1- 1 000 725
- WO-A1-02/02298
- FR-A1- 2 879 497
- FR-A2- 2 613 662
- GB-A- 1 050 562
- US-A- 5 597 435
- US-A1- 2006 186 580
- US-A1- 2009 098 337
- L. A. Hoeckelman: "Environmental protection and sealing" In: D. B. Miracle & S. L. Donaldson: "Composites", décembre 2001 (2001-12), ASM HANDBOOK, USA, XP002655803, ISBN: 0871707039 vol. 21, pages 659-665, page 659; tableau 2

## Description

### DOMAINE TECHNIQUE ET ART ANTÉRIEUR

La présente invention se rapporte à un dispositif de fabrication d'objets en matériau composite, en particulier d'objets présentant des exigences mécaniques et de dimensionnement fortes, par exemple les carters de turbomachine, tels que les carters de soufflante. La présente invention se rapporte également à un procédé de fabrication d'objets en matériau composite mettant en oeuvre un tel dispositif.

Un turboréacteur comporte classiquement, d'amont en aval, un compresseur basse pression ou soufflante, un compresseur haute pression, une chambre de combustion, une turbine haute pression et une turbine basse pression.

En outre, le turboréacteur comporte un carter extérieur ou carter de soufflante, un carter intérieur et un carter intermédiaire concentrique aux deux premiers carters et divisant l'espace délimité entre les carters extérieur et intérieur en une veine primaire affectée à la compression puis à la détente des gaz de propulsion et en une veine secondaire dans laquelle circule l'air de dilution.

Le carter de soufflante remplit plusieurs fonctions. Notamment, il définit la veine d'entrée d'air dans le moteur. Il a également pour fonction de former un carter de rétention formant un piège à débris retenant les débris, tels que les objets aspirés ou des fragments d'aubes endommagées projetés par centrifugation, afin qu'ils n'atteignent d'autres parties de l'aéronef.

De manière générale, on recherche à réduire la masse du turboréacteur et pour cela à réduire la masse des différents éléments le composant. Une des solutions pour atteindre ce résultat est de réaliser les pièces en un matériau présentant une densité inférieure.

Le carter de soufflante est réalisé en alliage d'aluminium, il est alors plus léger qu'un carter de soufflante en acier.

On cherche cependant encore à réduire sa masse. Les matériaux composites sont une option intéressante. En effet, les pièces pouvant être réalisées en matériau composite sont celles n'ayant pas à connaître de températures trop élevées, ce qui est le cas du carter de soufflante puisque la température à laquelle il peut être soumis est de l'ordre de -50 °C à maximum 120°C. Des carters de soufflante ou de rétention en matériau composite sont connus de l'état de la technique, par exemple du document EP 1 961 923. Le carter de soufflante est réalisé à partir d'une préforme fibreuse par tissage tridimensionnel autour d'un mandrin. Lors de la fabrication, la préforme est recouverte d'une enveloppe souple définissant avec le mandrin un espace étanche. Une dépression est établie entre cette espace étanche et une résine est introduite dans l'espace, l'imprégnation est alors facilitée par la dépression. Une étape de polymérisation de la résine a ensuite lieu.

On obtient alors directement une ébauche permettant d'obtenir le carter après usinage.

Ce procédé est désigné « procédé par infusion ». Il présente l'avantage de requérir un outillage relativement léger. Cependant le temps requis pour réaliser une pièce est relativement long. Par ailleurs, il est peu efficace pour supprimer les défauts de la préforme en cas de foisonnement des fibres tissées et ne garantit pas la géométrie de la pièce.

Il existe un autre procédé par injection de résine liquide, dit RTM (« Resin Transfer Molding en anglais ») qui consiste à disposer la préforme entre un moule rigide et un contre-moule rigide, de les solidariser. L'espace ainsi délimité présente les cotes finales de l'objet à réaliser, et d'injecter sous pression la résine. La pression d'injection peut aller jusqu'à 15 Bar.

Ce procédé présente l'avantage d'offrir un temps de cycle relativement court. Par ailleurs, du fait de l'utilisation d'un contre-moule rigide, le foisonnement peut-être maîtrisé. En revanche, il impose d'utiliser un outillage « lourd » et de manipulation malaisée, notamment dans le cas de pièces de grandes dimensions, puisqu'il doit tenir la pression d'injection. Par ailleurs, en cas de foisonnement trop important, des difficultés apparaissent lors de la mise en place du contre-moule et fermeture du moule.

Il est à noter qu'un tel carter peut présenter un très grand diamètre, par exemple de l'ordre de 2 m. Par conséquent, les moule et contre-moule présentent une taille et une masse importantes leur manutention est donc laborieuse.

Le document US2006/186580 décrit un dispositif de fabrication d'éléments par moulage par injection comportant cuve fermée par un couvercle, la cuve ayant un coefficient de dilatation égal ou inférieur à celui du couvercle.

C'est par conséquent un but de la présente invention d'offrir un dispositif de réalisation de pièces en matériau composite, en particulier de carter de turbomachine, permettant d'obtenir des pièces avec une grande précision dimensionnelle tout en étant relativement « léger » et de manipulation facilitée.

C'est également un but de la présente invention d'offrir un procédé de réalisation de pièces en matériau composite relativement simple à mettre en oeuvre et permettant d'obtenir des pièces aux dimensions souhaitées.

### EXPOSÉ DE L'INVENTION

Les buts précédemment énoncés sont atteints par un dispositif de fabrication comportant un moule et un contre-moule rigides, le matériau formant le moule interne présentant un coefficient de dilatation très supérieur à celui formant au moins en partie le contre-moule et des moyens d'injection d'une résine entre le moule et le contre-moule à une pression relativement faible inférieure à 4 Bar.

La différence de dilatation entre le moule et le contre-moule qui en résulte lors de la fabrication de la pièce, qui se déroule à chaud, provoque une compaction de la préforme qui a été préalablement imprégnée à froid, garantissant la précision dimensionnelle de la pièce. En outre, le dispositif, en particulier le contre-moule peut-être de structure plus légère car la pression d'injection est réduite. Par ailleurs, le moule présente « à froid » des dimensions intérieures supérieures aux dimensions finales recherchées pour l'objet, le montage du contre-moule sur le moule est facilité malgré le foisonnement.

Le contre-moule est par exemple réalisé en matériau composite. Il se dilate donc très peu en température. Par ailleurs, il est relativement léger et donc plus facilement manipulable.

Grâce à l'invention, le dispositif peut être relativement "léger" du fait de la pression d'injection relativement faible. Cependant le dispositif permet d'injecter la résine sous pression. La dépression générée dans l'espace entre le moule et le contre-moule assure un bon mouillage de la préforme.

Dans le cas où le contre-moule comporte des brides de fixation au moule, celles-ci sont avantageusement en un matériau dont le coefficient de dilatation est proche ou égal à celui du matériau du moule.

La présente invention a alors principalement pour objet un dispositif de fabrication de pièces en matériau composite à partir d'une préforme en fibres tissées, comportant un moule rigide et un contre-moule délimitant un espace destiné à recevoir une préforme en fibres tissées, le moule étant réalisé en un matériau dont le coefficient de dilatation est sensiblement plus élevé que celui du contre-moule, ledit dispositif comportant également des moyens d'injection sous pression d'une résine dans ledit espace.

De manière particulièrement avantageuse, le contre-moule est en matériau composite. Le moule est alors préférentiellement en acier ou en alliage d'aluminium.

Le dispositif selon l'invention peut avantageusement comporter des moyens aptes à générer une dépression dans l'espace délimité par le moule et le contre-moule.

Le dispositif selon la présente invention permet de fabriquer des pièces ayant une forme de révolution, tel qu'un carter de soufflante d'une turbomachine, pour cela le moule comporte un corps cylindrique d'axe longitudinal et des flasques latéraux. Le contre-moule comporte un corps cylindrique et des contre-brides latérales, les contre-brides étant destinées à être solidarisées sur les flasques, le corps du moule et le corps du contre-moule étant concentriques. La préforme est destinée à être disposée entre le corps du moule et le corps du contre-moule. Le matériau du corps du moule présente un coefficient de dilatation sensiblement plus élevé que celui du corps du contre-moule.

De manière préférée, la différence entre les coefficients de dilatation du moule et du contre-moule est supérieure ou égale à 23.10⁻⁶. De manière très avantageuse, le dispositif selon l'invention comporte des moyens pour exercer une effort de serrage selon l'axe longitudinal sur les contre-brides vers l'extérieur du moule, et des moyens pour exercer un effort de serrage radial sur les contre-brides orienté vers l'axe longitudinal. Les efforts nécessaires à la fixation du contre-moule sur le moule sont alors réduits et les risques de déformation de la préforme sont également réduits.

De préférence, les contre-brides du contre-moule et les flasques du moule ont des coefficients de dilatation proches ou égaux.

Avantageusement, les flancs du corps du contre-moule en contact avec les contre-brides sont inclinés par rapport à l'axe longitudinal.

Les contre-brides peuvent être en plusieurs parties, de préférence le plan de joint entre deux parties d'une contre-bride est incliné par rapport à l'axe longitudinal, ce qui permet de limiter la détérioration des joints entre les parties de contre-bride.

La présente invention a également pour objet un procédé de fabrication d'un carter de turbomachine par mise en oeuvre du dispositif de fabrication selon la présente invention, comportant les étapes de :
a) réalisation d'une préforme en fibres tissées,
b) mise en place de la préforme sur le moule,
c) mise en place du contre-moule sur la préforme,
d) application des efforts de serrage,
e) injection de la résine sous pression et chauffage du dispositif,
f) polymérisation de ladite résine,
g) retrait du contre-moule et du moule.

Lors de l'étape d), des efforts appliqués sont à la fois des efforts axiaux sur les contre-brides selon l'axe longitudinal vers l'extérieur et des efforts radiaux sur les contre-brides vers l'intérieur.

Après polymérisation, les efforts de serrage sont relâchés, le contre-moule et le moule étant laissés en place.

### BRÈVE DESCRIPTION DES DESSINS

La présente invention sera mieux comprise à l'aide de la description qui va suivre et des dessins en annexes sur lesquels :
- la figure 1 est une vue d'ensemble d'un turboréacteur dont le carter de soufflante peut être fabriqué grâce au dispositif et au procédé selon la présente invention,
- la figure 2 est une vue en coupe du carter de soufflante pouvant être réalisé grâce au dispositif et au procédé selon la présente invention,
- la figure 3 est une vue en coupe d'un exemple de réalisation d'un dispositif de fabrication selon la présente invention,
- la figure 4 est une vue en perspective du moule d'un dispositif de fabrication selon la présente invention,
- la figure 5 est une vue en coupe longitudinale d'une variante de réalisation du dispositif de la figure 3,
- la figure 6 est une vue en coupe d'un exemple avantageux de réalisation d'un dispositif de fabrication selon la présente invention,
- la figure 7 est une vue de dessus du dispositif de la figure 6 montrant les plans de joints entre les contre-brides du contre-moule,
- la figure 8 est une représentation schématique d'un exemple d'assemblage de contre-brides correspondant à la figure 7.

### EXPOSÉ DÉTAILLÉ DE MODES DE RÉALISATION PARTICULIERS

L'invention sera décrite ci-après dans le cadre de son application à la fabrication d'un carter de soufflante d'un turboréacteur. Cependant la présente invention peut être appliquée à la fabrication de tout objet en matériau composite présentant un axe de révolution, et plus généralement à tout objet en matériau composite.

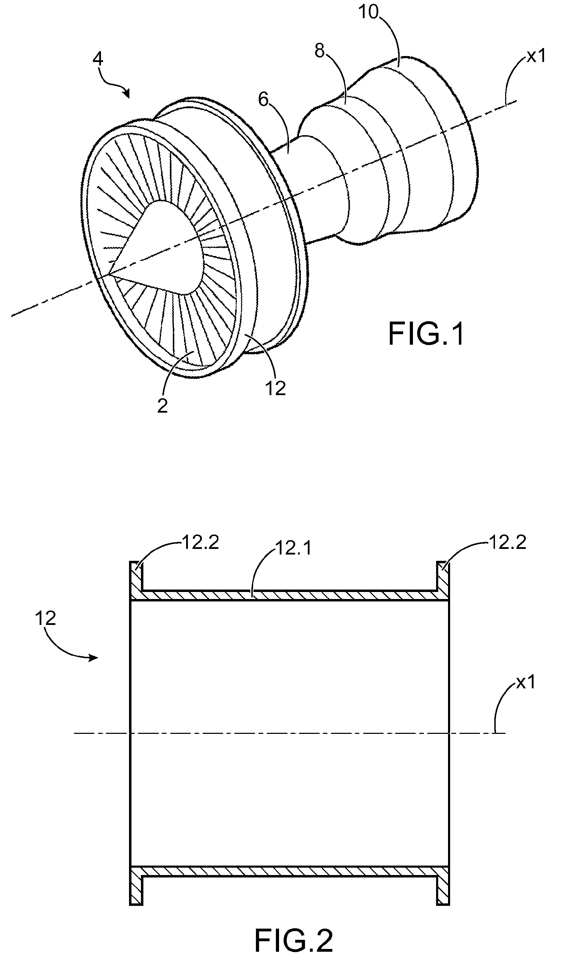

Sur la figure 1, on peut voir un turboréacteur d'axe X1 équipé d'un carter de soufflante selon la présente invention. Celui-ci comporte, de l'amont vers l'aval dans le sens de l'écoulement de flux gazeux, une soufflante 2 disposée en entrée du moteur, un compresseur 4, une chambre de combustion 6, une turbine haute-pression 8 et une turbine basse pression 10.

Le turboréacteur est logé à l'intérieur d'un carter comprenant plusieurs parties correspondant à différents éléments du turboréacteur. Ainsi la soufflante 2 est entourée par un carter de soufflante 12.

Sur la figure 2, on peut voir une vue en coupe du carter de soufflante 12 d'axe X1 formé d'un corps cylindrique 12.1 et de brides situées aux extrémités longitudinales 12.2 du corps cylindrique 12.1.

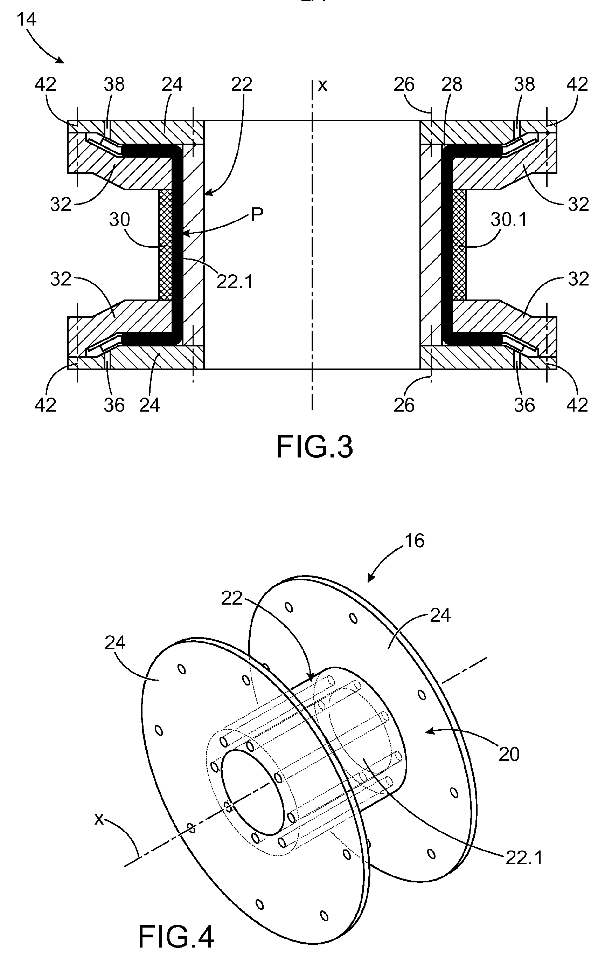

Sur la figure 3, on peut voir, représenté schématiquement, un exemple de réalisation d'un dispositif de fabrication 14 d'un carter en matériau composite selon la présente invention mis en oeuvre dans le cadre du procédé d'injection selon la présente invention. Le carter est fabriqué à partir d'une préforme P réalisée par tissage de fibres.

Le dispositif 14 présente un profil général de révolution autour d'un axe X. Le dispositif comporte un moule 16 et un contre-moule 18.

Le moule 16, représenté en perspective sur la figure 4, est réalisé en matériau présentant une certaine rigidité, comme par exemple en matériau métallique et présentant un coefficient de dilatation c1. Le moule 16 est par exemple réalisé en acier ou en alliage aluminium.

Le moule définit le forme intérieur du carter de soufflante 12. Comme on peut le voir dans l'exemple représenté sur la figure 4, le moule présente la forme d'une jante ; celui-ci comporte une cavité annulaire 20 destinée à recevoir la préforme P en fibres tissées. La cavité annulaire 20 est délimitée entre un corps cylindrique 22 d'axe X à section circulaire et des flasques 24 à chacune des extrémités longitudinales du corps 22. Le corps cylindrique 22 comporte donc une face radialement externe 22.1 destinée à venir en contact avec l'intérieur du carter une fois l'injection et la polymérisation terminées.

Le corps cylindrique 22 peut être réalisé d'un seul tenant. Chaque flasque 24 peut également être réalisé d'un seule tenant ou en plusieurs portions angulaires.

Les flasques 24 sont fixés sur le corps cylindrique 22, par exemple au moyen de vis 26 symbolisées par leur axes de sorte à réaliser un ensemble rigide. Celles-ci sont réparties angulairement sur toute la périphérie des flasques.

Les flasques 24 et le corps 22 peuvent être réalisés dans le même matériau ou dans des matériaux présentant des coefficients de dilatation de valeurs proches.

Le contre-moule 18 présente une forme annulaire correspondant à la cavité 22 du moule de sorte que, lorsque le contre-moule 18 est disposé dans le moule 16, un espace 28 soit délimité pour la réalisation du carter. L'espace 28 est destiné à recevoir la préforme en fibres tissées ainsi que la résine.

Le contre-moule 18 est destiné à définir la forme extérieure du carter. Celui-ci présente également une forme de jante avec un corps annulaire 30 d'axe X et des contre-brides 32 à chacune des extrémités longitudinales du corps 30. Le corps 30 sera désigné « corps externe », et le corps 22 sera désigné « corps interne ».

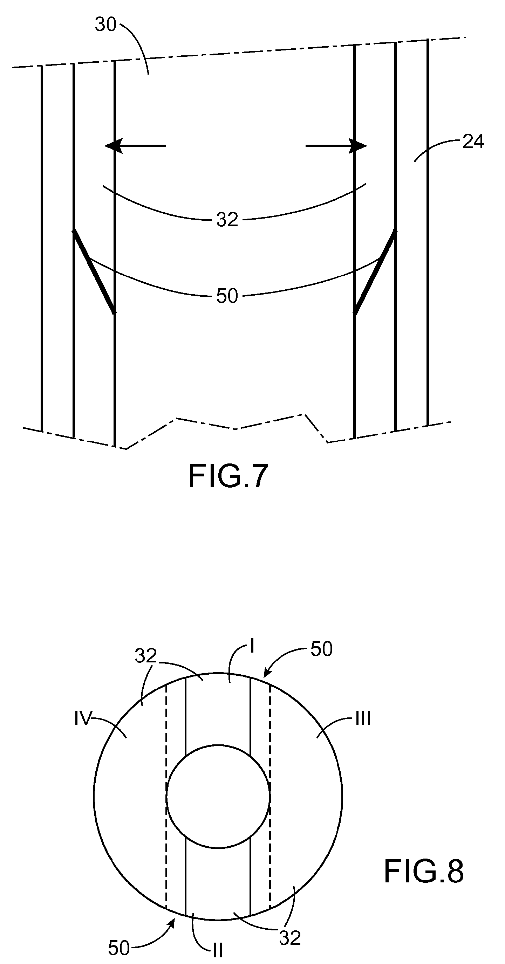

Le corps externe 30 est composé d'au moins deux parties, de préférence trois en forme d'arc de cercle, pour permettre son montage autour de la préforme. La séquence de fermeture se fera dans l'ordre décrit en figure 8 (I, II, III, IV). Les contre-brides 32 sont également réalisées en plusieurs parties, au moins deux.

Le corps externe 30 comporte donc une face radialement intérieure 30.1 destinée à être en contact avec la surface radialement extérieure du carter une fois l'injection et la polymérisation terminées.

De manière préférée, dans le cas du carter de soufflante, les arêtes des brides 32.1, 32.2 situées longitudinalement à l'extérieur définissent les rayons entre le corps tubulaire 12.1 et les brides 12.2 du carter. Cette configuration facilite la réalisation de l'outillage et le démoulage de la pièce. Par exemple, les différentes parties du corps externe sont maintenues par un cerclage.

Selon la présente invention, le corps externe 30 est réalisé en un matériau présentant un coefficient de dilatation c2 sensiblement inférieur à celui c1 du corps interne 22.

De manière préférentielle, la différence entre les coefficients de dilatation c1-c2 est de l'ordre de 23.10⁻⁶ K⁻¹.

Le coefficient de dilatation du matériau constituant le moule est par exemple compris entre e_{.}10⁻⁶ K⁻¹ à 12.10⁻⁶ K⁻¹, et le coefficient de dilatation d'une partie au moins du contre-moule est par exemple compris entre 0 à 23.10⁻⁶ K⁻¹.

De manière avantageuse, le corps externe 30 est réalisé en matériau composite, qui présente un coefficient de dilatation très inférieur à celui de l'acier ou de l'aluminium. Par ailleurs, la dilatation d'un matériau composite est faible, par conséquent sa forme et ses dimensions varient peu ou très peu en cas d'échauffement. Ainsi le contre-moule en matériau composite présente les cotes finales souhaitées pour l'objet.

En revanche, le moule 16, qui présente une dilatation importante, a « à froid », i.e. à température ambiante, des dimensions intérieures inférieures aux dimensions extérieures finales de l'objet, et « à chaud », i.e. à la température d'injection, des dimensions intérieures correspondant à celles attendues pour l'objet.

Dans le cas d'un corps interne 22 en aluminium, le corps externe 30 peut être en acier.

Les contre-brides 32 sont avantageusement réalisées dans un matériau dont le coefficient de dilatation est proche de ou égal à celui des flasques 24. Par exemple, les contre-brides 32 et les flasques 24 sont réalisés dans le même matériau. En effet, les contre-brides 32 étant destinées à être fixées sur les flasques 24, il est alors préférable que ces deux parties aient un comportement en dilatation proche.

Le dispositif de fabrication selon l'invention comporte également des moyens d'injection de la résine sous pression dans l'espace 28. Le moule est traversé par au moins un canal 36 formant injecteur débouchant dans l'espace 28 et relié à une alimentation sous pression de résine. Le canal d'injection 36 est réalisé dans un des flasques 24. Avantageusement, plusieurs canaux d'injection 36 sont répartis angulairement dans tout le flasque 24. La pression d'injection est de préférence inférieure 4 Bar, par exemple de l'ordre de 2 à 3 Bar.

L'autre flasque 24 est traversé par au moins un canal d'évent 38 pour permettre l'évacuation de l'air contenu dans l'espace 28 lors de l'injection. En outre, ce canal d'évent 38 permet, lorsque de la résine s'échappe par ce canal, de détecter lorsqu'une quantité de résine suffisante a été injectée. Avantageusement, plusieurs canaux d'évent 38 sont répartis angulairement dans l'autre flasque 24.

En variante, on peut réaliser les canaux d'injection et d'évent dans le contre-moule.

Les contre-brides 32 du contre-moule 18 sont fixées sur les flasques du moule par exemple par des vis 42 symbolisées par leurs axes parallèle à l'axe X, chaque vis traversant de part en part un flasque et la contre-bride en vis-à-vis de celui-ci. De manière avantageuse, les vis 42 sont sous forme de vis rotulantes montées articulées sur les brides. La mise en place du contre-moule est alors simplifiée.

Les différentes pièces du dispositif délimitent un espace 28 sensiblement étanche à la résine.

Pour cela, des joints d'étanchéité (non représentés) sont prévus entre les différents éléments du dispositif de fabrication.

Des joints, par exemple des joints toriques, sont prévus entre le corps interne 22 et les flasques 24. Des joints, par exemple des joints toriques, sont prévus entre le corps externe 30 et les contre-brides 32. Des joint sont également prévus entres les différentes parties des flasques 24, entre les différentes parties des contre-brides 32 et entre les différentes parties du corps externe 30. Des joints, par exemple des joints toriques, sont également prévus entre les contre-brides 32 et les flasques 24.

De manière préférentielle, les joints entre les corps interne 22 et les flasques 24, et entre le corps externe 30 et les contre-brides 32 sont disposés au plus près de l'espace 28, empêchant la résine de pénétrer excessivement entre les pièces du dispositif.

Les joints sont par exemple en silicone.

De manière avantageuse, le dispositif de fabrication selon l'invention comporte également des moyens pour créer une dépression dans l'espace 28. Les canaux d'évent 38 peuvent alors être utilisés pour générer la dépression dans l'espace 28. Pour cela, on prévoit que l'espace 28 soit également étanche à l'air.

Par exemple, on peut prévoir de recouvrir l'intérieur du contre-moule avec une vessie afin de réaliser l'étanchéité entre les contre-brides et le corps interne.

La génération d'une dépression dans l'espace 28 préalablement à l'injection améliore l'imprégnation de la préforme.

Le niveau de dépression générée dans l'espace 28 est par exemple de l'ordre de 1 Bar.

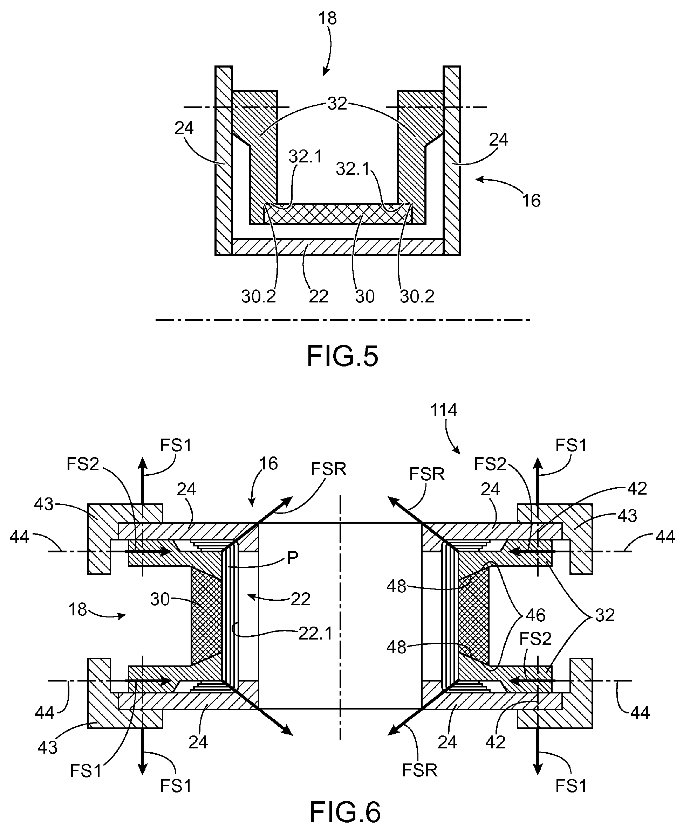

Sur la figure 5, on peut voir une variante avantageuse de réalisation de l'assemblage entre le corps externe 30 et les contre-brides 32 du contre-moule 18. Dans cette variante, chaque bride 32 comporte dans sa face radialement intérieure une rainure 32.1 formée dans l'arête intérieure et recevant une arête 30.2 du corps externe 30. Cet assemblage facilite la réalisation de l'étanchéité entre les brides 32 et le corps externe 30.

Sur la figure 6, on peut voir un autre exemple de réalisation particulièrement avantageux d'un dispositif de fabrication 114 selon la présente invention, permettant de réduire les efforts nécessaires à la mise en place du contre-moule sur le moule.

Les références utilisées pour désigner les éléments du dispositif de la figure 3 seront reprises pour désigner les éléments du dispositif de la figure 6.

Le dispositif de fabrication 114 de la figure 6 diffère du dispositif 14 de la figure 3 en ce que des moyens de serrage radiaux sont ajoutés.

Le dispositif de la figure 6 comporte un moule 16 d'axe X et un contre-moule 18 concentrique au moule 16.

Le moule 16 comporte un corps interne 22 et des flasques 24 à ses extrémités longitudinales. Le contre-moule 18 comporte un corps externe 30 et des contre-brides 32.

En outre, le dispositif 114 selon la figure 6 comporte des moyens pour appliquer un effort de serrage longitudinal vers l'extérieur du dispositif entre chaque contre-bride 32 et le flasque 24 associé. Il s'agit par exemple de vis 42 traversant les contre-brides 32 et les flasques 24. De manière avantageuse, les vis sont du type vis rotulante montées articulées sur les contre-brides. Les flasques 24 comportent des encoches dans lesquelles sont disposées les vis lors du serrage. Un écrou est vissé sur chaque vis à l'opposée de la contre-bride par rapport au flasque et vient exercer un effort de serrage sur la contre-bride vers l'extérieur comme symbolisé par les flèches désignées FS1.

Ces moyens de serrage sont prévus angulairement sur toute la périphérie du dispositif.

Par ailleurs, le dispositif de fabrication selon cet exemple avantageux comporte des moyens pour exercer un effort de serrage radial sur les contre-brides en direction de l'axe X. Dans l'exemple représenté, cet effort radial symbolisé par les flèches FS2 est exercé via des blocs butée 43 rapportés sur les flasques 24 en amont des contre-brides 32 dans le sens des flèche FS2. Des vis de serrage 44, symbolisées par leur axe, sont montées dans les blocs butée 42 et viennent appuyer sur les contre-brides 32 radialement vers l'axe X.

Des butées mécaniques sont avantageusement prévues pour limiter les efforts de serrage radiaux et axiaux.

Par ailleurs, les flancs 46 du corps externe 30 venant en contact avec les contre-brides 32 sont avantageusement inclinés par rapport à la direction radiale vers l'intérieur, avantageusement à 45°. Les flancs 48 des contre-brides en contact avec les flancs 46 sont également inclinés de manière similaire. Lors de la dilatation différentielle, les flancs inclinés permettent de maîtriser des jeux pour conserver l'étanchéité. Le contre-moule 18 est alors soumis à des efforts de serrage axiaux FS1 et radiaux FS2. La force de serrage résultante FSR est alors inclinée vers l'extérieur du moule. Les forces FSR ne sont pas représentées à l'échelle. Cette combinaison d'efforts de serrage axiaux et radiaux a pour effet d'assurer un compactage efficace des brides de la préforme, et donc de limiter les efforts nécessaires au montage du contre-moule sur le moule, en particulier en cas d'un foisonnement important de la préforme.

En outre, comme cela est visible sur la figure 7 qui représente une vue de dessus d'un contre-moule selon l'invention, les plans de joint 50 entre deux parties successives des brides du contre-moule sont de préférence inclinés par rapport à la direction axiale de serrage. L'angle d'inclinaison α est au moins égal à 45°.

Sur la figure 8, on peut voir représenté schématiquement un exemple de parties I, II, III, IV formant les contre-brides 32 du contre-moule d'un dispositif de fabrication selon l'invention.

Les plans de joint entre les parties formant le corps externe 30 en composite sont par exemple droits.

Ce dispositif est particulièrement intéressant dans le cas de préformes présentant un foisonnement supérieur ou égal à 20 %.

Nous allons maintenant décrire un procédé de fabrication selon la présente invention d'un carter de soufflante en matériau composite mettant en oeuvre le dispositif de fabrication de la figure 6.

Préalablement, on réalise une préforme P en fibres tissées.

La préforme P peut être réalisée sur un métier à tisser, amenée dans l'usine d'injection et disposée autour du moule 16. La préforme P est par exemple réalisée par tissage tridimensionnel.

Les fibres sont par exemple des fibres de carbone, de verre, de Kevlar® et la résine est par exemple une résine époxy.

Lorsque la préforme est en place sur le moule 16, le contre-moule 18 est monté sur le moule 16 contre la préforme. Pour cela, on met en place les différentes parties des contre-brides 32 et du corps externe 30. Un effort de serrage FS2 orienté radialement vers l'intérieur du moule 16 est exercé sur les contre-brides 32 au moyen des vis 44 et un effort de serrage axial FS1 vers l'extérieur est également exercé sur les contre-brides 32 au moyen des vis rotulantes 42. Il est à noter qu'il n'y a pas de liaisons mécaniques entre les contre-brides et le corps externe du contre-moule 30, pour tolérer les différences de dilatation entre les contre-brides et le corps externe du contre-moule 30.

Comme indiqué précédemment, le moule présente « à froid » des dimensions intérieures inférieures aux dimensions finales du carter. La mise en place de la préforme P dans le moule et la fermeture du moule avec le contre-moule sont alors rendues plus faciles, même en cas de foisonnement important de la préforme.

Grâce au dispositif de la figure 6, et à l'application combinée d'efforts de serrage axiaux et radiaux, l'assemblage du contre-moule sur le moule requiert un effort réduit, ce qui réduit les risques de détérioration de la préforme et les joints d'étanchéité.

On génère ensuite, de manière avantageuse une dépression de l'ordre de 1 Bar dans l'espace 28.

Lors d'une étape suivante, on injecte sous une pression au plus de 4 Bar, la résine dans l'espace 28 via les canaux d'injection, l'air s'échappant simultanément par les canaux d'évent.

La résine imprègne alors la préforme. L'imprégnation est facilitée grâce à la combinaison d'une dépression et de la pression d'injection.

L'injection se fait à une température de l'ordre de 160°C-180°C.

A cette température, les matériaux du corps interne 22 et du corps externe 30 se dilatent. Or, c'est principalement le corps du moule qui se dilate, provoquant un déplacement de la face 22.1 du corps interne 22 radialement vers l'extérieur. La face 30.1 du corps du contre-moule 18 a une position radiale sensiblement inchangée.

Le moule en se dilatant prend sensiblement les dimensions intérieures souhaitées du carter.

La dilatation différentielle provoque une compaction de la préforme imprégnée de résine non polymérisée i.e. des plies ayant pu apparaître lors de la réalisation de la préforme et de sa mise en place sur le moule.

Grâce à cette compaction, la précision dimensionnelle des pièces est accrue.

Il apparaît donc, grâce à l'invention, une compaction automatique de la préforme avant la polymérisation de la résine. Il n'est alors plus nécessaire de prévoir une compaction préalablement à la mise en place du contre-moule.

Grâce à l'invention, on peut réaliser des pièces avec une très grande précision avec un foisonnement pouvant atteindre 20 %.

Une étape de polymérisation a ensuite lieu lorsque la préforme et la résine remplissent les conditions dimensionnelles attendues.

On effectue ensuite un desserrage à chaud de contre-moule sur le moule afin d'éviter les contraintes sur la pièce.

En fin de refroidissement, le contre-moule puis le moule sont retirés. Lors du refroidissement, le moule reprend ses dimensions initiales, il n'applique alors pas de contrainte sur la pièce moulée. Le démoulage est alors facilité.

La pièce ainsi obtenue forme une ébauche qui sera ensuite généralement usinée.

A titre d'exemple, dans le cas où le moule est en alliage d'aluminium et le corps externe 30 du contre-moule est en acier, pour une pièce d'un diamètre de 2 m, pour une température de 160°C la dilatation sera de :
- 7,5 mm environ pour le moule en alliage d'aluminium, et
- 3,75 mm environ pour le contre-moule en acier.

Grâce à l'invention, on obtient un compactage supplémentaire d'environ 3,75 mm.

Les conditions d'injection liées au dispositif de fabrication selon la présente invention permettent une imprégnation plus rapide de la préforme. Le temps de cycle est donc réduit. Ce qui est particulièrement intéressant car l'imprégnation de la résine doit se faire relativement rapidement, en 20 minutes environ.

Le dispositif de fabrication est de manipulation plus aisée. En effet, les différentes parties du contre-moule peuvent être aisément montées et démontées, en particulier lorsqu'une partie du contre-moule est en matériau composite, et du fait de la séparation entre les contre-brides et le corps externe. Les temps de montage et de démontage sont donc réduits, réduisant encore le temps de cycle.

Le dispositif de fabrication selon la présente invention s'applique à la fabrication de toutes pièces en matériau composite, que celles-ci présentent ou non un axe de révolution.

Par ailleurs, il est particulièrement adapté à la réalisation de pièces axisymétriques de grandes dimensions.

Les moyens de serrage et de fixation décrits ne sont en aucun cas limitatifs est tout autre moyen à la disposition de l'homme du métier est applicable.

Par ailleurs, la structure du dispositif de fabrication des figures 3, 5 et 6 est adaptée à la réalisation d'un carter de soufflante muni de brides, cependant celui-ci peut être modifié pour réaliser par exemple un carter sans bride.

Le dispositif selon l'invention est également adapté à la réalisation de pièces, de type éléments de carrosserie comme les capots. Dans ce cas, le moule présente un fond conformé suivant la forme de la pièce à réaliser et le contre-moule vient s'appliquer par-dessus la préforme.

## Revendications

1. Dispositif de fabrication de pièces ayant une forme de révolution, tel qu'un carter de soufflante d'une turbomachine, lesdites pièces étant en matériau composite à partir d'une préforme (P) en fibres tissées, comportant un moule (16) rigide et un contre-moule (18) délimitant un espace (28) destiné à recevoir une préforme (P) en fibres tissées, le contre-moule étant configuré pour être monté dans le moule, le moule (16) comportant un corps cylindrique (22) d'axe longitudinal (X) et des flasques latéraux (24), et le contre-moule (18) comportant un corps cylindrique (30) et des contre-brides latérales (32), les contre-brides (32) étant destinées à être solidarisées sur les flasques (24), le corps (22) du moule (16) et le corps (30) du contre-moule (18) étant concentriques, la préforme (P) étant destinée à être disposée entre le corps (22) du moule (16) et le corps (30) du contre-moule (18), le matériau du corps (22) du moule (16) a un coefficient de dilatation sensiblement plus élevé que celui du corps (30) du contre-moule (18), ledit dispositif comportant également des moyens d'injection (36) sous pression d'une résine dans ledit espace (28), ladite pression d'injection étant inférieure à 4 Bar, et des moyens aptes à générer une dépression dans l'espace (28) délimité par le moule (16) et le contre-moule (18).

2. Dispositif de fabrication selon la revendication 1, dans lequel la différence entre les coefficients du moule et du contre-moule est inférieure ou égale (MB) à 23.10⁻⁶ K⁻¹.

3. Dispositif de fabrication selon la revendication 1 ou 2, dans lequel le contre-moule (18) est en matériau composite.

4. Dispositif de fabrication selon la revendication 1, 2 ou 3, dans lequel le moule (16) est en acier ou en alliage d'aluminium.

5. Dispositif de fabrication selon l'une des revendications 1 à 4, comportant des moyens (42) pour exercer une effort de serrage selon l'axe longitudinal (X) sur les contre-brides (32) vers l'extérieur du dispositif, et des moyens (44) pour exercer un effort de serrage radial sur les contre-brides (32) orienté vers l'axe longitudinal (X).

6. Dispositif de fabrication selon l'une des revendications 1 à 5, dans lequel les contre-brides (32) et les flasques (24) ont des coefficients de dilatation proches ou égaux.

7. Dispositif de fabrication selon l'une des revendications 1 à 6, dans lequel les flancs du corps (30) du contre-moule (18) en contact avec les contre-brides (32) sont inclinés par rapport à l'axe longitudinal (X).

8. Dispositif de fabrication selon l'une des revendications 1 à 7, dans lequel les contre-brides (32) sont en plusieurs parties, le plan de joint (50) entre deux parties d'une contre-bride étant incliné par rapport à l'axe longitudinal (X).

9. Procédé de fabrication d'un carter de turbomachine par mise en oeuvre du dispositif de fabrication selon l'une des revendications 1 à 8, comportant les étapes de :
a) réalisation d'une préforme en fibres tissées,
b) mise en place de la préforme sur le moule,
c) mise en place du contre-moule sur la préforme,
d) génération d'une dépression dans l'espace entre le moule et le contre-moule,
e) injection de la résine sous une pression inférieure à 4 Bar,
f) chauffage du dispositif,
g) polymérisation de ladite résine,
h) retrait du contre-moule et du moule.

10. Procédé de fabrication selon la revendication 9, dans lequel l'étape a) et l'étape b) sont simultanées, la préforme étant réalisée directement sur le moule.

11. Procédé de fabrication selon la revendication 9 ou 10, comportant une étape supplémentaire après la mise en place du contre-moule sur la préforme d'application d'efforts de serrage entre le moule et le contre-moule.

12. Procédé de fabrication selon la revendication 11, dans lequel les efforts de serrage comportent des efforts axiaux sur les contre-brides selon l'axe longitudinal vers l'extérieur et des efforts radiaux sur les contre-brides vers l'intérieur sont appliqués.

13. Procédé de fabrication selon la revendication 11 ou 12, dans lequel après polymérisation, les efforts de serrage sont relâchés, le contre-moule et le moule étant laissés en place.

## Patentansprüche

1. Vorrichtung zur Herstellung von Werkstücken, die eine Umlauf-Form aufweisen, wie z. B. ein Gebläsegehäuse eines Turbotriebwerks, wobei diese Werkstücke aus Verbundstoff bestehen, und zwar ausgehend von einer Vorform (P) aus gewebten Fasern, wobei die Vorrichtung eine starre Form (16) und eine Gegenform (18) umfasst, welche einen Zwischenraum (28) umgrenzen, der dazu bestimmt ist, eine Vorform (P) aus gewebten Fasern aufzunehmen, wobei die Gegenform dazu geformt ist, in der Form montiert zu werden, wobei die Form (16) einen zylindrischen Körper (22) mit der Längsachse (X) und Seitenwangen (24) aufweist und die Gegenform (18) einen zylindrischen Körper (30) und seitliche Gegenflansche (32) aufweist, wobei die Gegenflansche (32) dazu vorgesehen sind, an den Seitenwangen (24) befestigt zu werden, wobei der Körper (22) der Form (16) und der Körper (30) der Gegenform (18) konzentrisch sind, wobei die Vorform (P) dazu bestimmt ist, zwischen dem Körper (22) der Form (16) und dem Körper (30) der Gegenform (18) angeordnet zu werden, wobei das Material des Körpers (22) der Form (16) einen deutlich höheren Ausdehnungskoeffizienten hat als das des Körpers (30) der Gegenform (18), wobei die genannte Vorrichtung ferner Mittel zum Einspritzen (36) eines Harzes unter Druck in den genannten Zwischenraum (28) aufweist, wobei dieser Einspritzdruck geringer als 4 Bar ist, sowie Mittel aufweist, die geeignet sind, in dem durch die Form (16) und die Gegenform (18) umgrenzten Zwischenraum (28) einen Unterdruck zu erzeugen.

2. Vorrichtung zur Herstellung nach Anspruch 1, bei der die Differenz zwischen den Koeffizienten der Form und der Gegenform kleiner oder gleich (MB) 23.10⁻⁶ K⁻¹ ist.

3. Vorrichtung zur Herstellung nach Anspruch 1 oder 2, bei der die Gegenform (18) aus Verbundstoff besteht.

4. Vorrichtung zur Herstellung nach Anspruch 1, 2 oder 3, bei der die Form (16) aus Stahl oder aus einer Aluminiumlegierung besteht.

5. Vorrichtung zur Herstellung nach einem der Ansprüche 1 bis 4, welche Mittel (42) aufweist, um auf die Gegenflansche (32) entlang der Längsachse (X) eine Klemmkraft nach außen bezogen auf die Vorrichtung auszuüben, sowie Mittel (44) aufweist, um auf die Gegenflansche (32) eine radiale Klemmkraft in Richtung der Längsachse (X) auszuüben.

6. Vorrichtung zur Herstellung nach einem der Ansprüche 1 bis 5, bei der die Gegenflansche (32) und die Seitenwangen (24) nahe beieinander liegende oder gleiche Ausdehnungskoeffizienten haben.

7. Vorrichtung zur Herstellung nach einem der Ansprüche 1 bis 6, bei der die Seiten des Körpers (30) der Gegenform (18), die sich in Kontakt mit den Gegenflanschen (32) befinden, gegenüber der Längsachse (X) geneigt sind.

8. Vorrichtung zur Herstellung nach einem der Ansprüche 1 bis 7, bei der die Gegenflansche (32) mehrteilig sind, wobei die Verbindungsebene (50) zwischen zwei Teilen eines Gegenflanschs gegenüber der Längsachse (X) geneigt ist.

9. Verfahren zur Herstellung eines Gehäuse eines Turbotriebwerks durch Anwendung der Vorrichtung zur Herstellung nach einem der Ansprüche 1 bis 8, welches die folgenden Verfahrensschritte umfasst:
a) Herstellen einer Vorform aus gewebten Fasern,
b) Einsetzen der Vorform in die Form,
c) Anbringen der Gegenform an der Vorform,
d) Erzeugen eines Unterdrucks in dem Zwischenraum zwischen der Form und der Gegenform,
e) Einspritzen des Harzes unter einem Druck von weniger als 4 Bar,
f) Erwärmen der Vorrichtung,
g) Polymerisierung des genannten Harzes,
h) Entfernen der Gegenform und der Form.

10. Herstellungsverfahren nach Anspruch 9, wobei der Verfahrensschritt a) und der Verfahrensschritt b) simultan ausgeführt werden, wobei die Vorform direkt in der Form hergestellt wird.

11. Herstellungsverfahren nach Anspruch 9 oder 10, welches nach dem Anbringen der Gegenform an der Vorform einen zusätzlichen Verfahrensschritt der Ausübung von Klemmkräften zwischen der Form und der Gegenform beinhaltet.

12. Herstellungsverfahren nach Anspruch 11, bei dem die Klemmkräfte axiale Kräfte auf die Gegenflansche entlang der Längsachse nach außen gerichtet sowie nach innen gerichtete radiale Kräfte auf die Gegenflansche umfassen.

13. Herstellungsverfahren nach Anspruch 11 oder 12, bei dem die Klemmkräfte nach der Polymerisierung beendet werden, wobei die Gegenform und die Form an ihrem Platz bleiben.

## Claims

1. A device for manufacturing parts with a rotational shape, such as a fan casing of a turbomachine, said parts being made of composite material from a preform (P) made of woven fibres, comprising a rigid mould (16) and a counter-mould (18) delimiting a space (28) intended to accommodate a preform (P) made of woven fibres, the center-mould (28) being configured to be mounted in the mould (16), the mould (16) comprising a cylindrical body (22) of lengthways axis (X) and side flanges (24), and the counter-mould (18) comprising a cylindrical body (30) and side counter-flanges (32), the counter-flanges (32) being configures to be attached securely to the flanges (24), the body (22) of the mould (16) and the body (30) of the counter-mould (18) being concentric, the preform (P) being intended to be positioned between the body (22) of the mould (16) and the body (30) of the counter-mould (18), and the material of the body (22) of the mould (16) having an appreciably higher expansion coefficient than that of the body (30) of the counter-mould (18), said device also comprising means for injection (36) under pressure of a resin into said space (28), and said injection pressure being less than 4 Bar, and means able to produce a vacuum pressure in the space (28) delimited by the mould (16) and the counter-mould (18).

2. A manufacturing device according to claim 1, in which the difference between the coefficients of the mould and the counter-mould is inferior to or equal (MB) to 23.10⁻⁶ K⁻¹.

3. A manufacturing device according to claim 1 or 2, in which the counter-mould (18) is made of a composite material.

4. A manufacturing device according to claim 1, 2 or 3, in which the mould (16) is made of steel or an aluminium alloy.

5. A manufacturing device according to claims 1 to 4, comprising means (42) to exert a clamping force along the lengthways axis (X) on the counter-flanges (32) towards the outside of the device, and means (44) to exert a radial clamping force on the counter-flanges (32) aligned with the lengthways axis (X).

6. A manufacturing device according to claims 1 to 5, in which the counter-flanges (32) and the flanges (24) have similar or equal expansion coefficients.

7. A manufacturing device according to one of the claims 1 to 6, in which the sides of the body (30) of the counter-mould (18) in contact with the counter-flanges (32) are inclined relative to the lengthways axis (X).

8. A manufacturing device according to one of the claims 1 to 7, in which the counter-flanges (32) are in several portions, the mating surface (50) between two portions of a counter-flange being inclined relative to the lengthways axis (X).

9. A method of manufacture of a turbomachine casing through the use of the manufacturing device according to one of the claims 1 to 8, comprising the steps of:
a) manufacture of a preform made of woven fibres,
b) installation of the preform on the mould,
c) installation of the counter-mould on the preform,
d) production of a vacuum pressure in the space between the mould and the counter-mould,
e) injection of the resin under a pressure of less than 4 bar,
f) heating of the device,
g) polymerisation of said resin,
h) removal of the counter-mould and the mould.

10. A method of manufacture according to claim 9, in which step a) and step b) are simultaneous, the preform being produced directly on the mould.

11. A method of manufacture according to claim 9 or 10, using a device according to claim 6, comprising an additional step, after the installation of the counter-mould on the preform, of the application of clamping forces between the mould and the counter-mould.

12. A method of manufacture according to claim 11, in which the clamping forces comprise axial forces on the counter-flanges along the lengthways axis towards the outside, and radial forces on the counter-flanges towards the inside are applied.

13. A method of manufacture according to claim 11 or 12, in which, after polymerisation, the clamping forces are slackened, and where the counter-mould and the mould are left in position.
